# EUROPÄISCHE PATENTSCHRIFT

(11) **EP 4 267 347 B1**
(45) Veröffentlichungstag und Bekanntmachung des Hinweises auf die Patenterteilung: **30.10.2024**
(21) Anmeldenummer: 22723992.8
(22) Anmeldetag: 14.04.2022
(51) Int. Cl.: B25H 1/02

(54) **BAUTISCH ZUM HERSTELLEN EINES FILTERMODULS UND VERFAHREN ZUM HERSTELLEN EINES FILTERMODULS**
CONSTRUCTION TABLE FOR PRODUCING A FILTER MODULE, AND METHOD FOR PRODUCING A FILTER MODULE
TABLE DE CONSTRUCTION POUR FABRIQUER UN MODULE DE FILTRE ET PROCÉDÉ DE FABRICATION D'UN MODULE DE FILTRE

(30) Priorität: 21.04.2021 DE 202021102140 U
(43) Veröffentlichungstag der Anmeldung: 01.11.2023
(73) Patentinhaber: Neufilter GmbH, 48599 Gronau (DE)
(72) Erfinder: NEUMANN, Jens, (verstorben) (DE)
(74) Vertreter: Werner & ten Brink PAe PartGes mbB Bentheim
(86) Internationale Anmeldenummer: PCT/EP2022/059995
(87) Internationale Veröffentlichungsnummer: WO 2022/223424

(56) Entgegenhaltungen:
- CN-A- 111 037 518
- CN-A- 111 168 620
- GB-A- 693 489

## Beschreibung

Die hier vorgeschlagene Neuerung betrifft das technische Gebiet des Abscheidens von mit einem Luftstrom (Rohgasstrom) mitgeführten Partikeln, insbesondere das Abscheiden von mit einem sogenannten Farbnebel mitgeführten Farb- oder Lackpartikeln (Farbnebelabscheidung). Vorrichtungen zu diesem Zweck sind bereits bekannt, zum Beispiel in Form des in der EP 2 532 409 B beschriebenen Filtermoduls.

Konkret betrifft die hier vorgeschlagene Neuerung eine als Bautisch bezeichnete Vorrichtung, welche zum Herstellen einer als Filtermodul bezeichneten Vorrichtung zum Abscheiden von mit einem Rohgasstrom mitgeführten Partikeln, insbesondere Farbpartikeln, bestimmt ist, sowie ein Verfahren zum Herstellen eines Filtermoduls unter Verwendung des Bautisches.

Eine Aufgabe der vorgeschlagenen Neuerung besteht darin, die Herstellung eines solchen oder ähnlichen Filtermoduls zu erleichtern.

Aus der CN 111 037 518 A ist eine Vorrichtung mit einer im Weitesten Sinne als Arbeitsebene/Arbeitsplatte fungierenden Rollenbahn sowie einem Ausschnitt im Anschluss an die Rollenbahn bekannt.

Aus der GB 693 489 A ist ein Tisch mit drehbaren Zylindern zum Komprimieren von Filtermaterial bekannt. Aus der CN 111 168 620 A, die die Präambel des Anspruches 1 offenbart, ist eine Vorrichtung mit einer Arbeitsplatte, einer Ausnehmung in der Arbeitsplatte sowie einer die Ausnehmung oberhalb der Arbeitsplatte umgebenden Portalstruktur bekannt. Die oben skizzierte Aufgabe wird bezüglich der Vorrichtung erfindungsgemäß mittels einer im Folgenden als Bautisch bezeichneten Vorrichtung mit den Merkmalen des Anspruchs 1 und bezüglich des Verfahrens mittels eines Verfahrens mit den Merkmalen des parallelen Verfahrensanspruchs gelöst.

Die Vorrichtung - der Bautisch - umfasst eine Arbeitsplatte mit einem Ausschnitt in der Arbeitsplatte sowie eine Tragkonstruktion oberhalb der Arbeitsplatte und an der Tragkonstruktion angebrachte Tragrollen, wobei sich unter den Tragrollen (innerhalb der Gruppe der Tragrollen) eine letzte Tragrolle über dem Ausschnitt befindet.

Die Besonderheit der hier vorgeschlagenen Vorrichtung besteht darin, dass über die Tragrollen zumindest eine Materialbahn (genau eine Materialbahn oder mehrere Materialbahnen) geführt werden kann, die ausgehend von der letzten Rolle unmittelbar in einen in dem Ausschnitt in der Arbeitsplatte platzierten Karton geführt werden kann. Die oder jede Materialbahn und der Karton sind Bestandteile eines mittels der Vorrichtung herstellbaren und bei bestimmungsgemäßer Verwendung mittels der Vorrichtung hergestellten Filtermoduls.

Der Vorteil der Vorrichtung besteht darin, dass bezüglich der zu verwendenden Materialbahnen (oder einer Mehrzahl von Materialbahnen) mit sogenannter Rollenware gearbeitet werden kann und sich insoweit ein kontinuierlicher Arbeitsprozess ergibt und Abschnitte von der Rollenware erst vorgenommen werden müssen, wenn die jeweilige Materialbahn bestimmungsgemäß in dem Karton platziert ist. Damit werden stets genau die tatsächlich benötigten Längen einer Materialbahn verwendet. Es entstehen also keine unnötigen Reste und vor allem ist - anders als bei einem vorherigen Ablängen der Materialbahn - sichergestellt, dass die Materialbahn auf jeden Fall ausreichend lang ist.

Zu der hier vorgeschlagenen Vorrichtung gehören auch ein Verfahren zum Herstellen eines Filtermoduls mittels der Vorrichtung und eine Verwendung der Vorrichtung zum Herstellen eines Filtermoduls. Zur Vermeidung unnötiger Wiederholungen gilt für die weitere Beschreibung, dass Merkmale und Details, die im Zusammenhang mit der gegenständlichen Vorrichtung beschrieben sind, selbstverständlich auch im Zusammenhang mit und im Hinblick auf ein Verfahren zum Herstellen eines Filtermoduls mittels der Vorrichtung sowie eine Verwendung der Vorrichtung zum Herstellen eines Filtermoduls und umgekehrt gelten. Dementsprechend kann das Verfahren auch mittels einzelner oder mehrerer Verfahrensmerkmale fortgebildet sein, die sich auf die Funktion einzelner oder mehrerer Merkmale der Vorrichtung beziehen, und die Vorrichtung kann entsprechend durch aufgrund des Verfahrens resultierende Merkmale fortgebildet sein. Folglich gelten Merkmale und Details, die im Zusammenhang mit dem Verfahren zum Herstellen eines Filtermoduls beschrieben sind, selbstverständlich auch im Zusammenhang mit und im Hinblick auf die zur Ausführung des Verfahrens und/oder die zur Verwendung im Rahmen des Verfahren hergerichtete Vorrichtung selbst und jeweils umgekehrt, so dass bezüglich der Offenbarung zu den einzelnen Aspekten der vorgeschlagenen Neuerung stets wechselseitig Bezug genommen wird bzw. werden kann.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie einer Auslegung der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform der gegenständlichen Vorrichtung / des gegenständlichen Verfahrens nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer vorteilhaften Ausführungsform umfasst die Vorrichtung, insbesondere als Bestandteil der Tragkonstruktion oder an der Tragkonstruktion, eine Haltekonstruktion sowie zumindest einen an der Haltekonstruktion schwenkbeweglichen Haltefinger. Der zumindest eine Haltefinger wird beim Abziehen einer auf den Tragrollen geführten Materialbahn ausgeschwenkt und behindert das Abziehen nicht. Der zumindest eine Haltefinger verhindert aber ein unbeabsichtigtes Zurückrutschen der Materialbahn.

Bei einer vorteilhaften Ausführungsform einer Vorrichtung mit einer Haltekonstruktion sowie zumindest einem an der Haltekonstruktion schwenkbeweglichen Haltefinger ist der zumindest eine Haltefinger längenverstellbar. Aufgrund dieser Verstellbarkeit kann der zumindest eine Haltefinger zum Beispiel an unterschiedliche Dicken einer Materialbahn oder an unterschiedliche Dicken einer Mehrzahl aufeinander liegender Materialbahnen angepasst werden.

Der Ausschnitt in der Arbeitsplatte ist durch jeweils zwei einander gegenüberliegende Ränder begrenzt und vorteilhaft ist mittels des Ausschnitts ein Karton für ein Filtermodul und dieser mit umgeklappten Laschen aufnehmbar, wobei die Ränder des Ausschnitts die Laschen des Kartons in einer Offenstellung halten. Die Laschen behindern somit den Prozess der Herstellung eines Filtermoduls und ein Verfahren zur Herstellung eines Filtermoduls nicht.

Die mit der Anmeldung eingereichten Patentansprüche sind Formulierungsvorschläge ohne Präjudiz für die Erzielung weitergehenden Patentschutzes. Da speziell die Merkmale der abhängigen Ansprüche im Hinblick auf den Stand der Technik am Prioritätstag eigene und unabhängige Erfindungen bilden können, behält die Anmelderin sich vor, diese oder noch weitere, bisher nur in der Beschreibung und/oder Zeichnung offenbarte Merkmalskombinationen zum Gegenstand unabhängiger Ansprüche oder Teilungserklärungen zu machen. Sie können weiterhin auch selbständige Erfindungen enthalten, die eine von den Gegenständen der jeweils in Bezug genommenen Ansprüche unabhängige Gestaltung aufweisen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen.

Es zeigen
- Figur 1: eine Vorrichtung zum Herstellen eines Filtermoduls ("Bautisch"),
- Figur 2: und
- Figur 3: den Bautisch aus Figur 1 in jeweils einer Seitenansicht,
- Figur 4: und
- Figur 5: den Bautisch aus Figur 1 in der Seitenansicht gemäß Figur 3 und jeweils mit Materialbahnen,
- Figur 6: eine Haltekonstruktion des Bautisches und daran schwenkbewegliche Haltefinger sowie
- Figur 7: zwei Teile eines Haltefingers.

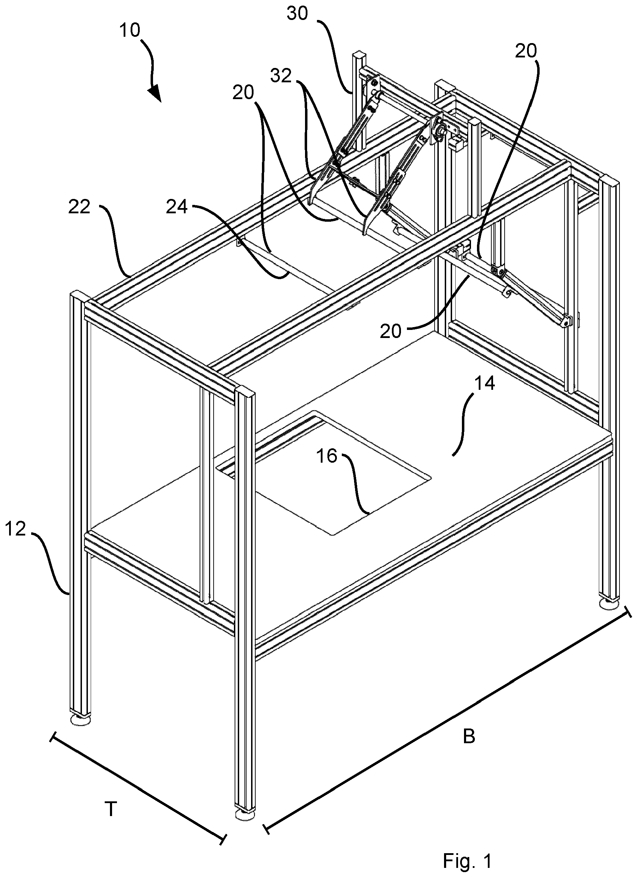

Die Darstellung in Figur 1 zeigt eine hier kurz als Bautisch 10 bezeichnete Vorrichtung 10 zum Herstellen eines Filtermoduls, zum Beispiel eines Filtermoduls wie in der EP 2 532 409 B beschrieben, oder eines ähnlichen Filtermoduls, jedenfalls eines Filtermoduls, das in seinem Innern zumindest ein mehrfach umgewendetes und als Filter- und/oder Abscheideelement wirksames bahnförmiges Filter- und/oder Abscheideelement aufweist.

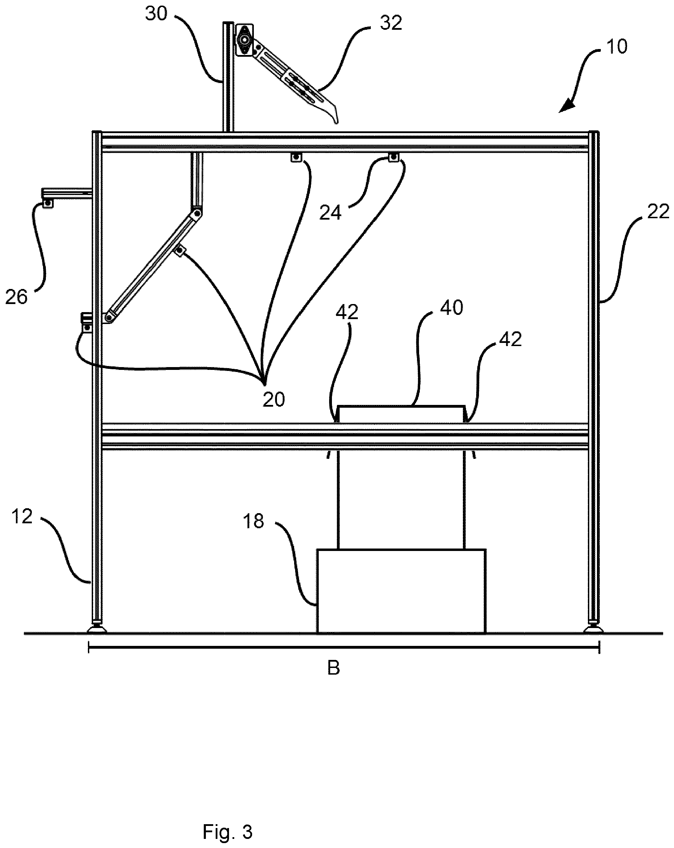

Im Interesse einer besseren Lesbarkeit der weiteren Beschreibung wird diese am Beispiel einer Herstellung eines Filtermoduls gemäß der EP 2 532 409 B fortgesetzt. Die hier im Vordergrund stehenden Merkmale dieses Filtermoduls sind: Ein als äußerer Rahmen fungierender Karton 40 (Figur 3); in dem Karton 40 zumindest ein mehrfach umgelegtes und als Filter- und/oder Abscheideelement wirksames bahnförmiges Filter- und/oder Abscheideelement sowie Abstandshalter zwischen aufgrund des Umlegens einander zugewandten Abschnitten des Filter- und/oder Abscheideelements.

Das bahnförmige Filter- und/oder Abscheideelement wird im Folgenden kurz als Materialbahn 28 (Figur 3) bezeichnet. Die Materialbahn 28 ist oder umfasst zum Beispiel ein mehrlagiges sogenanntes Papiergelegefilter wie dies in der EP 2 532 409 B erwähnt ist. Als Materialbahn 28 kommen aber zum Beispiel auch ein synthetisches Filtermedium oder ein Glasfasermedium oder eine Materialbahn 28, welche ein synthetisches Filtermedium und/oder ein Glasfasermedium umfasst, in Betracht.

Die Verwendbarkeit des Bautisches 10 ist ausdrücklich nicht auf eine Herstellung genau eines solchen Filtermoduls beschränkt. Eine Herstellung anderer, gleichartiger Filtermodule, die zumindest die drei oben skizzierten Merkmale aufweisen, ist ebenso möglich und Bestandteil der hier vorgeschlagenen Neuerung.

Dies schließt zum Beispiel auch ein, dass im Rahmen der Herstellung eines Filtermoduls mittels des Bautisches 10 vor, während oder nach dem Einführen der Materialbahn 28 in den Karton 40 und dem Platzieren von Abstandshaltern auf Abschnitten der Materialbahn 28 zumindest eine weitere Filter- und/oder Abscheidevorrichtung in dem Filtermodul platziert wird.

Der Bautisch 10 weist wie ein herkömmlicher Tisch eine Stand- oder Unterkonstruktion 12 und eine Arbeitsplatte 14 auf. Die Standkonstruktion 12 gewährleistet eine horizontale oder zumindest im Wesentlichen horizontale Ausrichtung der Arbeitsplatte 14 und umfasst zum Beispiel - wie gezeigt - vier Standbeine.

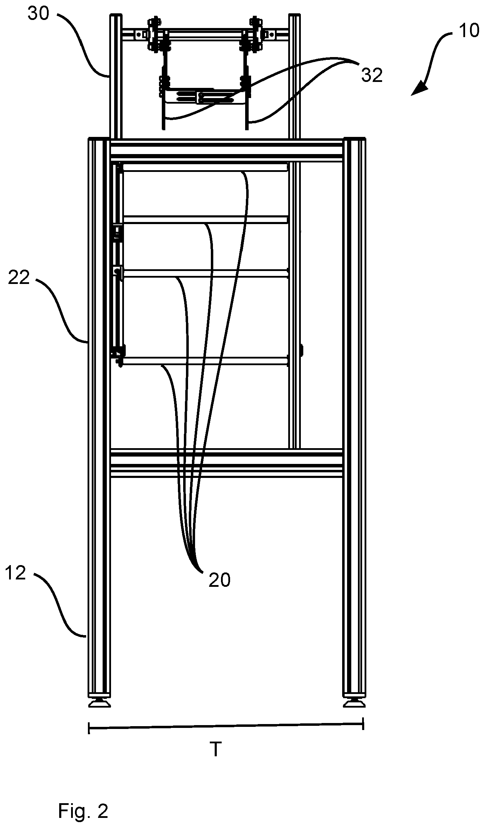

Die Arbeitsplatte weist einen Ausschnitt 16 auf. Der Ausschnitt 16 ist zur Aufnahme des als Rahmen des Filtermoduls fungierenden Kartons 40 bestimmt. Unterhalb des Ausschnitts 16 befindet sich eine (in Figur 1 und Figur 2 nicht gezeigte) Standfläche für einen in den Ausschnitt 16 eingesetzten Karton 40. Die Standfläche kann zu dem Bautisch 10 gehören, zum Beispiel in Form einer U-förmigen Konstruktion, deren zwei Schenkel im Bereich zweier gegenüberliegender Randlinien des Ausschnitts 16 an die Unterseite der Arbeitsplatte 14 anschließen und deren die beiden Schenkel verbindender Abschnitt als (ebene) Standfläche fungiert. Die Länge der Schenkel ist dann auf eine Höhe des Kartons 40 abgestimmt und zwar derart, dass der im Ausschnitt platzierte Karton 40 noch zumindest leicht über die Oberfläche der Arbeitsplatte 14 hinausragt. Anstelle einer solchen, mit dem Bautisch 10 verbundenen Konstruktion kommt auch das Aufstellen eines Sockels 18 (Figur 3) oder dergleichen unter der Arbeitsplatte 14 und unter dem Ausschnitt 16 in Betracht.

Der Ausschnitt 16 ist in Relation zu den Außenabmessungen des Kartons 40 übermaßig. Der Karton 40 des Filtermoduls weist - wie herkömmliche Kartons - an einer offenen Seite Laschen 42 (Figur 3) auf, insbesondere genau vier Laschen 42, die beim Schließen des Kartons 40 (und hier am Ende der Herstellung des Filtermoduls) in an sich bekannter Art und Weise umgelegt und mit einem Klebestreifen oder dergleichen fixiert werden. Die Laschen 42 eines offenen Kartons 40 sind - wie sicher jeder, der einen Karton mit Gegenständen befüllt hat, bereits erlebt hat - oftmals hinderlich. Die Übermaßigkeit des Ausschnitts 16 erlaubt ein Einstecken der Laschen 42 des Kartons 40 in den Ausschnitt 16. Die Laschen 42 des Kartons 40 sind damit in dem Ausschnitt 16 fixiert. Die von den Laschen 42 eingegrenzte Öffnung des Kartons 40 wird sicher offen gehalten und die Laschen 42 behindern den weiteren Herstellungsprozess nicht.

Zu dem Bautisch 10 gehört eine Materialführung. Diese umfasst mehrere, entsprechend der gezeigten Ausführungsform als Tragrollen 20 bezeichnete Führungselemente. Dabei handelt es sich bevorzugt um einzeln drehbar gelagerte, parallel zueinander angeordnete zylindrische Rollen oder vergleichbare Rollelemente, zum Beispiel mehrere entlang einer gemeinsamen Achse drehbar gelagerte Kugeln oder dergleichen. Die Führungselemente/Tragrollen 20 sind mit ihrer Längsachse in Richtung einer Tiefe der Arbeitsplatte 14 ausgerichtet (die Dimensionen Breite B und Tiefe T des Bautisches 10 und dessen Arbeitsplatte 14 und deren Richtung sind in der Darstellung in Figur 1 eingezeichnet). Die Tragrollen 20 werden mittels einer als Materialführung fungierenden Tragkonstruktion 22 gehalten, die sich über der Arbeitsplatte 14 erhebt und - wie gezeigt, aber grundsätzlich optional - mit der Standkonstruktion 12 verbunden sein kann, zum Beispiel derart, dass Teile der Standkonstruktion 12 einstückig in Teile der Tragkonstruktion 22 übergehen.

Die Tragkonstruktion 22 und die Anordnung der Tragrollen 20 in oder an der Tragkonstruktion 22 ermöglicht die Anbringung einer letzten Tragrolle 24 aus der Gruppe der Tragrollen 20 über dem Ausschnitt 16. Bei der Verwendung des Bautisches 10 wird über die Tragrollen 20 (alle Tragrollen 20 einschließlich der letzten Tragrolle 24) die jeweilige Materialbahn 28 (oder mehrere Materialbahnen 28) geführt.

Die Materialbahn 28 (oder eine Materialbahn 28 bei mehreren Materialbahnen 28) liegt bei der Führung über die Tragrollen 20 auf allen Tragrollen 20 auf. Eine in Richtung von deren Längsachse gemessene Ausdehnung (Länge) der Tragrollen 20 entspricht zumindest einer Breite einer über die Tragrollen 20 geführten oder über die Tragrollen 20 zu führenden Materialbahn 28, wobei diese Breite quer zu der bahnförmigen Längserstreckung der Materialbahn 28 gemessen wird.

Zumindest zu Beginn des Prozesses der Herstellung eines Filtermoduls hängt ein Ende der über die Tragrollen 20 geführten Materialbahn 28 gewissermaßen von der letzten Tragrolle 24 in Richtung auf den Ausschnitt 16 herab. Dort kann der Monteur das Bahnende greifen und in den im Ausschnitt 16 befindlichen Karton 40 führen und dort einlegen. Die Tragkonstruktion 22 lässt dafür und für die weiteren Handhabungsschritte ausreichend Platz über der Ebene der Arbeitsplatte 14.

Beim Einlegen des Bahnendes in den Karton 40 wird ein Abschnitt der Materialbahn 28 auf den Boden des Kartons 40 gelegt. Zum Erreichen des Bodens des Kartons 40 kann die Materialbahn 28 vom Monteur leicht über die Tragrollen 20 nachgezogen werden. Die jeweilige Materialbahn 28 ist dafür als Rollenware oder dergleichen in geeigneter Art und Weise neben dem Bautisch 10 gelagert, zum Beispiel auf einer drehbaren Trommel, einem Rollenlager, in einer Mulde oder dergleichen.

Auf den auf den Boden des Kartons 40 gelegten Abschnitt der Materialbahn 28 wird sodann ein Abstandshalter aufgelegt (in den Karton 40), zum Beispiel ein Abstandshalter wie in der EP 2 532 409 B beschrieben. Auf den danach im Karton 40 (und in einer Ausrichtung parallel zur Ebene des Bodens des Kartons 40) befindlichen Abstandshalter wird ein nächstfolgender Abschnitt der Materialbahn 28 aufgelegt (und die Materialbahn 28 dafür in den Karton 40 geführt). Die Materialbahn 28 kann dabei und dafür vom Monteur erneut leicht über die Tragrollen 20 nachgezogen werden. Beim Auflegen wechselt eine Richtung des Verlaufs der Materialbahn 28 im Karton 40 (S-förmiger Verlauf, mäandernder Verlauf) und die Materialbahn 28 ist danach im Karton 40 einmalig umgelegt und umgibt mit den einander zugewandten Flächenabschnitten den Abstandshalter. Dann wird auf den zuletzt in den Karton 40 geführten Abschnitt der Materialbahn 28 ein neuer Abstandshalter aufgelegt und sodann durch Nachführen und Abziehen der Materialbahn 28 über die Tragrollen 20 sowie Umlegen um den Abstandshalter und auf den Abstandshalter ein neuer Abschnitt der Materialbahn 28 in den Karton 40 geführt. Dies wird so lange wiederholt, bis der Karton 40 bis zu seiner Oberkante oder im Wesentlichen bis zu seiner Oberkante gefüllt ist. Dann wird die Materialbahn 28 quer zu deren Längserstreckung durchgeschnitten und der im Karton 40 befindliche Teil der Materialbahn 28 von der noch auf den Tragrollen 20 aufliegenden Materialbahn 28 getrennt.

Der Karton 40 wird anschließend verschlossen. Dafür wird der Karton 40 aus der Position im Ausschnitt 16 herausgehoben. Dabei werden die Laschen 42 des Kartons 40 frei. Diese werden in an sich bekannter Art und Weise zum Verschließen des Kartons 40 umgelegt und anschließend zum Beispiel mittels eines Klebestreifens oder dergleichen fixiert.

Beim Herstellen eines Filtermoduls mittels des Bautisches 10 kann über die Tragrollen 20 ein (ggf. mehrlagiges) bahnförmiges Filter- und/oder Abscheideelement (Materialbahn 28) geführt sein. Genauso können gleichzeitig mehrere jeweils bahnförmige Filter- und/oder Abscheideelemente (Materialbahnen 28) über die Tragrollen 20 geführt sein. Die Materialbahnen 28 liegen dann übereinander und nur die jeweils unterste Materialbahn 28 kommt mit den Tragrollen 20 unmittelbar in Kontakt. Auch bei mehreren Materialbahnen 28 ist eine Materialbahn 28 über die Tragrollen 20 geführt, nämlich eine Materialbahn 28 aus der Mehrzahl der Materialbahnen 28.

Bei mehreren mittels der Tragkonstruktion 22 geführten Materialbahnen 28 hängen beim Beginn der Herstellung eines Filtermoduls deren Enden von der letzten Tragrolle 24 in Richtung auf den Ausschnitt 16 und einen dort platzierten Karton 40 herab. Der Monteur greift alle Enden und führt diese gemeinsam in den Karton 40 ein. Das Auflegen von Abstandshaltern und das Umlegen der Materialbahnen 28 sowie das abschließende Verschließen des Kartons 40 erfolgt wie zuvor bereits beschrieben.

Die Darstellungen in Figur 2 und Figur 3 zeigen den Bautisch 10 gemäß Figur 1 in zwei unterschiedlichen Seitenansichten, nämlich in der Darstellung in Figur 2 mit Blick auf die die Tiefe T des Bautisches 10 bestimmende Seite und in der Darstellung in Figur 3 mit Blick auf die die Breite B des Bautisches 10 bestimmende Seite.

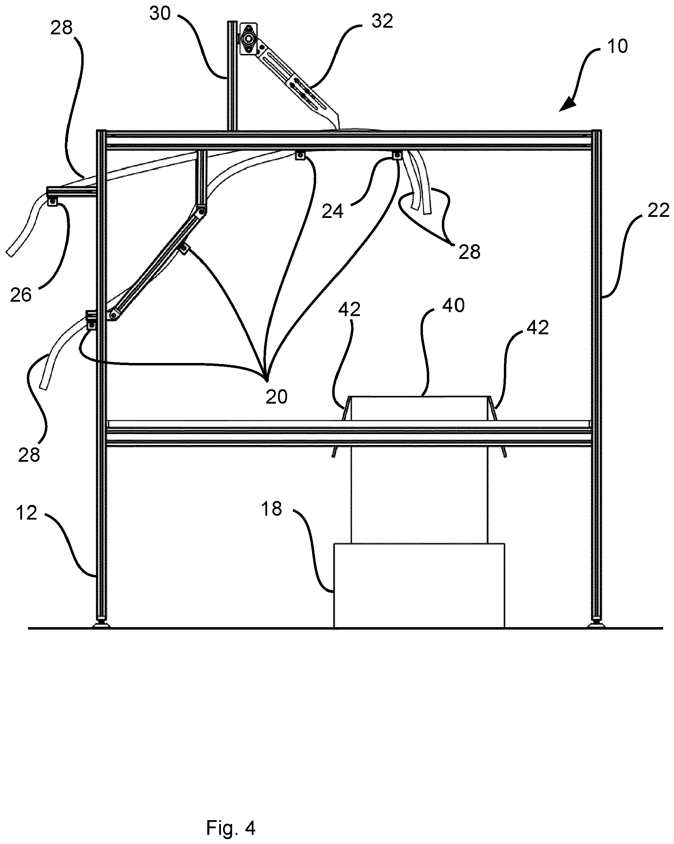

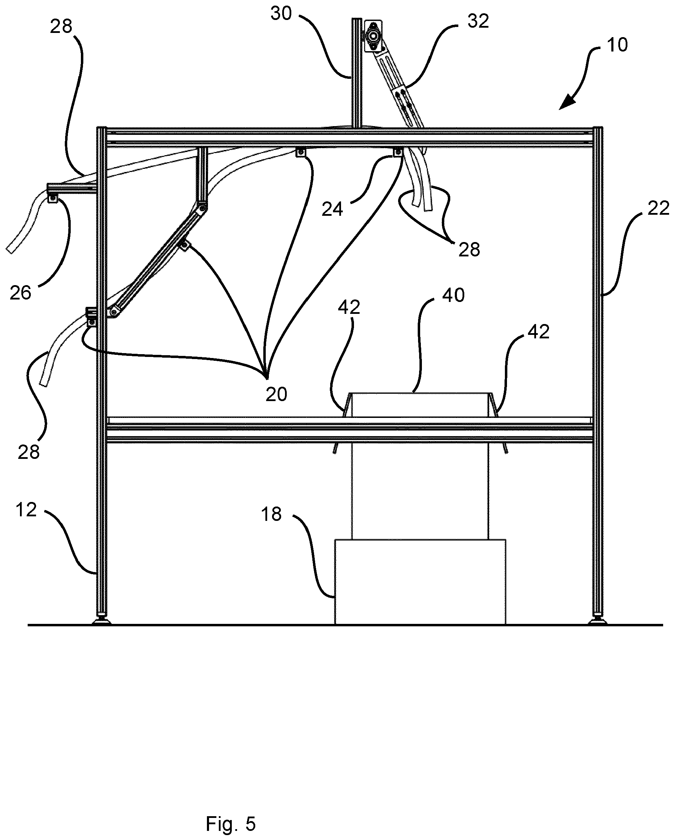

Speziell in der Darstellung in Figur 3 lässt die Anordnung der Tragrollen 20 und deren Abfolge bis zur letzten Tragrolle 24 den Verlauf einer über die Tragrollen 20 geführten Materialbahn 28 bei einer Verwendung des Bautisches 10 erkennen. In den Darstellungen in Figur 4 und Figur 5 ist beispielhaft ein Abschnitt einer über die Tragrollen 20 einschließlich der letzten Tragrolle 24 geführten Materialbahn 28 gezeigt.

In der Darstellung in Figur 3 ist noch eine weitere Tragrolle 26 gezeigt, die zu den bereits beschriebenen Tragrollen 20 gehört, und wie diese als Auflage und als Führung für eine Materialbahn 28 fungiert. Die weitere Tragrolle 26 kommt bei einer Verwendung mehrerer Materialbahnen 28 für eine anfänglich getrennte Führung einzelner Materialbahnen 28 in Betracht. Beispielhaft ist in den Darstellungen in Figur 4 und Figur 5 auch insoweit ein Abschnitt einer über die weitere Tragrolle 26, einzelne Tragrollen 20 sowie die letzte Tragrolle 24 geführten Materialbahn 28 gezeigt. Im Falle nur einer einzelnen Materialbahn 28 kann ein jeweiliger Weg der Materialbahn 28 über die Tragrollen 20, 24, 26 frei gewählt werden. Wesentlich ist, dass der Weg immer über die letzte Tragrolle 24 über dem Ausschnitt 16 in der Arbeitsplatte 14 führt.

Die Darstellung in Figur 3, Figur 4 und Figur 5 zeigt darüber hinaus noch - allerdings in schematisch stark vereinfachter Form - einen im Ausschnitt 16 der Arbeitsplatte 14 platzierten offenen Karton 40 für ein Filtermodul. Der Karton 40 steht auf einem Sockel 18; die Oberfläche des Sockels 18 fungiert als Standfläche für den Karton 40. Anstelle eines Sockels 18 kommt auch eine mit dem Bautisch 10 verbundene Konstruktion, zum Beispiel eine U-förmige Konstruktion wie weiter oben beschrieben und mit einer Standfläche für jeweils einen Karton 40, in Betracht. Grundsätzlich ist jede Form von Standfläche für jeweils einen Karton 40 optional. Mittels einer Standfläche für jeweils einen Karton 40 lässt sich eine für die Arbeit eines Monteurs angenehme Höhe der Arbeitsplatte 14 erreichen und eine wirksame Höhe einer wie auch immer ausgeführten Standfläche gleicht letztlich nur den Höhenunterschied zwischen der gewünschten Höhe (Arbeitshöhe) der Arbeitsplatte 14 und der Höhe des jeweiligen Kartons 40 aus. Eine von der Oberfläche der Arbeitsplatte 14 aus gemessene lichte Höhe der Tragkonstruktion 22 erlaubt zumindest ein Hantieren unter der Tragkonstruktion 22 beim Abziehen der Materialbahn 28 von den Tragrollen 20, 24, beim Einführen der Materialbahn 28 in den Karton 40 und beim Platzieren von Abstandshaltern oder dergleichen auf Abschnitten der Materialbahn 28 im Karton 40.

Der Karton 40 ist oben offen und die bei dem offenen Karton 40 freien und dessen Öffnung umgebenden Laschen 42 liegen an den Rändern des Ausschnitts 16 an und werden mittels des Ausschnitts 16, genauer mittels der Ränder des Ausschnitts 16, gehalten. Der Karton 40 ragt in dem so offen gehaltenen Zustand vorteilhaft zumindest leicht (einige Zentimeter) über die Oberfläche der Arbeitsplatte 14 hinaus und kann so beim Herstellen eines Filtermoduls leicht ergriffen und bewegt werden.

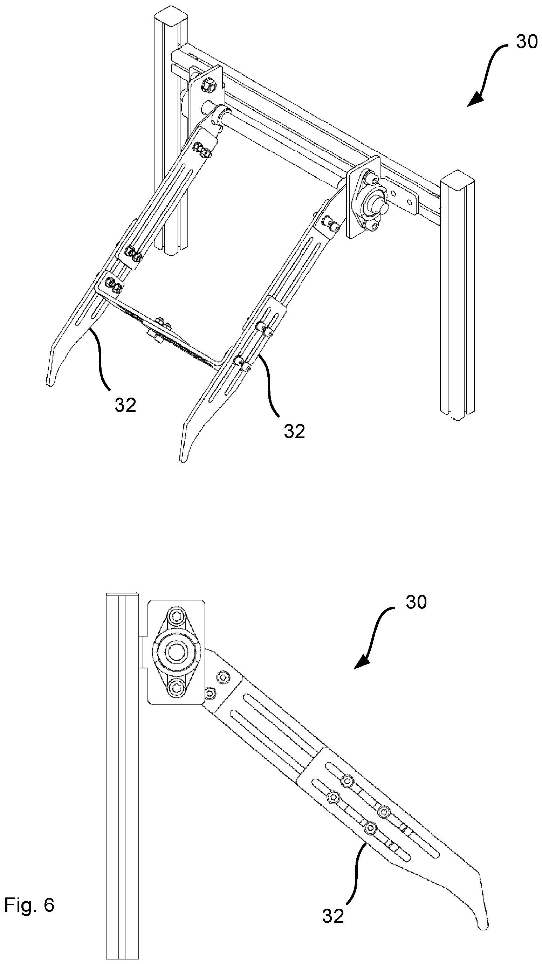

Bei der gezeigten Ausführungsform umfasst der Bautisch 10 als Bestandteil der Tragkonstruktion 22 oder an der Tragkonstruktion 22 vorteilhaft eine Haltekonstruktion 30 oberhalb einer durch die letzte Tragrolle 24 und die unmittelbar davor befindliche Tragrolle 20 definierten Ebene. Die Darstellung in Figur 6 zeigt die Haltekonstruktion 30 in einer isometrischen Ansicht (Figur 6, oben) und in einer Seitenansicht (Figur 6, unten).

Die Haltekonstruktion 30 endet bei der gezeigten Ausführungsform in zwei parallelen Haltefingern 32 (anstelle zweier Haltefinger 32 ist auch genau ein Haltefinger oder sind auch mehr als zwei Haltefinger möglich). Die Haltefinger 32 sind bevorzugt symmetrisch oder im Wesentlichen symmetrisch zur Längsachse der Tragrollen 20 platziert. Die Haltefinger 32 liegen auf der Oberfläche der Materialbahn 28 (bei nur einer über die Tragrollen 20 geführten Materialbahn 28) oder auf der Oberfläche der obersten Materialbahn 28 (bei mehreren zusammen über die Tragrollen 20 geführten Materialbahnen 28) auf und verhindern ein Zurückrutschen der Materialbahn(en) 28 aufgrund des Gewichts der Materialbahn(en) 28 stromabwärts der Tragrollen ("stromabwärts" bezieht sich hier auf die Abzugsrichtung der Materialbahn(en) 28 beim Herstellen eines Filtermoduls).

Die Haltekonstruktion 30 ist optional beweglich an der Tragkonstruktion 22 angebracht. Die bewegliche Anbringung bedeutet, dass die Haltekonstruktion 30 an der Tragkonstruktion 22 in verschiedene Positionen bewegt (verschoben) werden kann. Die Haltekonstruktion 30 ist also an der Tragkonstruktion 22 und entlang der Tragkonstruktion 22 verschieblich und ist an der jeweiligen Position fixierbar. Die Tragkonstruktion 22 ist dafür zum Beispiel - wie gezeigt - zumindest abschnittsweise in Form eines eine solche Verschieblichkeit ermöglichenden Profils ausgeführt oder umfasst ein solches Profil. Mit anderen Worten: Die Tragkonstruktion 22 oder der betreffende Abschnitt der Tragkonstruktion 22 und das dortige Profil fungieren als Kulisse für die Verschieblichkeit der Haltekonstruktion 30. Die Darstellungen in Figur 4 und Figur 5 zeigen die Haltekonstruktion 30 in unterschiedlichen Positionen. Genauso wie die Haltekonstruktion 30 verschieblich ist, sind optional auch die Tragrollen 20, 24, 26 oder zumindest einzelne Tragrollen 20, 24, 26 verschieblich. Die Verschieblichkeit der genannten Komponenten bedeutet, dass deren Position an die jeweiligen Erfordernisse angepasst werden kann.

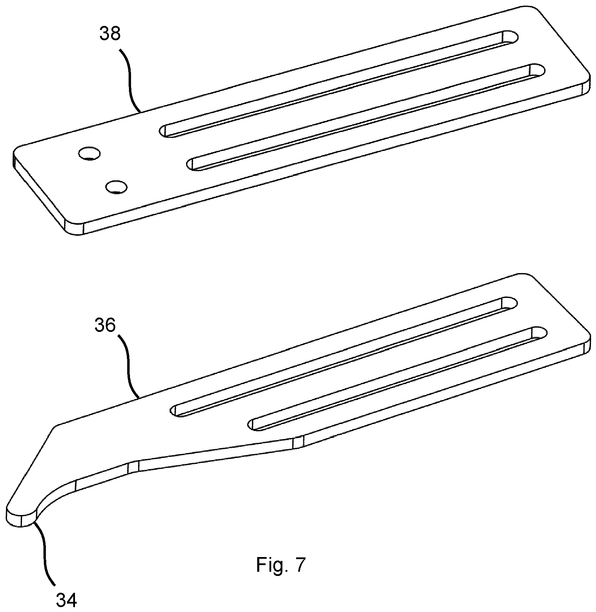

Die Haltefinger 32 sind an ihren Enden bevorzugt leicht spitz zulaufend ausgeführt. In dieser Form sinken die Spitzen 34 (Figur 7) leicht in das jeweilige Material der Materialbahn 28 oder der obersten Materialbahn 28 ein und verhindern so besonders wirksam ein Zurückrutschen. Bei einer Materialbahn 28 mit Öffnungen in ihrer Oberfläche (also zum Beispiel bei einem Papiergelege) greifen die Spitzen 34 oder zumindest eine Spitze 34 in solche Öffnungen ein und verhindern so ebenfalls besonders wirksam ein Zurückrutschen.

Die Haltefinger 32 sind länger als eine Höhe der Haltekonstruktion 30 (oder länger als eine Höhe der Schwenkachse der Haltefinger 32 an der Haltekonstruktion 30 oberhalb einer Ebene der Materialbahn 28 im Bereich des Aufliegens der Haltefinger 32 auf der Materialbahn 28) und an der Haltekonstruktion 30 schwenkbeweglich angebracht. Mit ihrer im Vergleich zur Höhe der Haltekonstruktion größeren Länge stehen die mit ihren Enden auf einer Materialbahn 28 aufliegenden Haltefinger 32 je nach Position der Haltekonstruktion 30 entweder schräg zur Ebene der Materialbahn 28 im Bereich des Aufliegens oder erreichen auch bereits von der letzten Tragrolle 24 in Richtung auf den Ausschnitt 16 in der Arbeitsplatte 14 herabhängende Abschnitte der Materialbahn 28. Beim Abziehen einer Materialbahn 28 über die Tragrollen 20 schwenken die Haltefinger 32 an der Haltekonstruktion 30 leicht aus und erlauben so ein Abziehen der Materialbahn 28 ohne eine Beschädigung der Oberfläche der Materialbahn 28. Mit dem Ende des Abziehens der Materialbahn 28 endet das Ausschwenken und die Haltefinger 32 senken sich unter Gravitationseinfluss auf die Materialbahn 28 ab oder legen sich unter Gravitationseinfluss an die Materialbahn 28 an und bewirken die das Zurückrutschen der Materialbahn 28 verhindernde Fixierung der Materialbahn 28.

Bei der gezeigten Ausführungsform sind die Haltefinger 32 in ihrer Länge verstellbar. Damit ist eine Anpassung an unterschiedliche Dicken einer Materialbahn 28 oder unterschiedliche Dicken mehrerer übereinander geführter Materialbahnen 28 möglich. Die Längenverstellbarkeit ist optional. Bei der gezeigten Ausführungsform sind die Haltefinger 32 zum Zwecke der Längenverstellbarkeit entlang ihrer Längserstreckung zumindest zweiteilig und diese beiden Teile 36, 38 (Figur 5) weisen jeweils Langlöcher (bevorzugt zwei parallele Langlöcher) auf, wobei die beiden Teile 36, 38 mittels Schrauben oder dergleichen, welche durch die Langlöcher geführt sind, miteinander verbunden sind oder miteinander verbunden werden. Durch Änderung der Relativposition dieser beiden Teile 36, 38 zueinander lässt sich die wirksame Länge der Haltefinger 32 einstellen (bei Langlöchern stufenlos, bei anstelle von Langlöchern entlang einer Linie nebeneinander positionieren Bohrungen entsprechend dem Bohrungsabstand).

Die Darstellung in Figur 7 zeigt die erwähnten beiden Teile 36, 38 eines zumindest zweiteiligen Haltefingers 32 mit jeweils zwei parallelen Langlöchern zur stufenlosen Längeneinstellung.

Obwohl die vorgeschlagene Neuerung im Detail durch das Ausführungsbeispiel näher illustriert und beschrieben wurde, so ist die Erfindung nicht auf das offenbarte Beispiel eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden eine hier als Bautisch 10 bezeichnete Vorrichtung 10 zum Herstellen einer Vorrichtung (Filtermodul) zum Abscheiden von mit einem Rohgasstrom mitgeführten Partikeln, insbesondere Farbpartikeln, sowie ein Verfahren zum Herstellen eines Filtermoduls unter Verwendung des Bautisches 10. Die Vorrichtung 10 - der Bautisch 10 - umfasst eine Arbeitsplatte 14 mit einem Ausschnitt 16 in der Arbeitsplatte 14 sowie einer Tragkonstruktion 22 mit oberhalb der Arbeitsplatte 14 an der Tragkonstruktion 22 angebrachten Tragrollen 20. Unter den Tragrollen 20 befindet sich eine letzte Tragrolle 24 über dem Ausschnitt 16 in der Arbeitsplatte. Der Ausschnitt 16 in der Arbeitsplatte 14 ist beim Herstellen eines Filtermoduls zur Aufnahme eines als Rahmen des Filtermoduls fungierenden Kartons 40 bestimmt. Die letzte Tragrolle 24 befindet sich also mit ihrer Position über dem Ausschnitt 16 auch in einer Position über einem in dem Ausschnitt 16 platzierten Karton 40. Über die Tragrollen 20 (über alle Tragrollen 20 einschließlich der letzten Tragrolle 24) wird beim Herstellen eines Filtermoduls und zum Herstellen eines Filtermoduls zumindest eine Materialbahn 28 geführt. Ein freies Ende der Materialbahn 28 hängt zumindest anfänglich von der letzten Tragrolle 24 herab. Die Materialbahn 28 kann durch Zug an dem freien Ende leicht von einer Rolle oder dergleichen abgenommen werden. Durch einen Zug am freien Ende der Materialbahn 28 kann dieses leicht in Richtung auf das Innere des Kartons 40 geführt und dort platziert werden. Beim weiteren Prozess des Herstellens des Filtermoduls können durch einen Zug an einem Rand der von der letzten Tragrolle 24 herabhängenden Materialbahn 28 weitere Abschnitte ("Abschnitt" bedeutet keine Zerteilung der Materialbahn 28) der Materialbahn 28 im Karton 40 platziert werden. Wenn die für die Herstellung des Filtermoduls benötigte Länge der Materialbahn 28 in dem Karton 40 platziert ist, wird der im Karton 40 befindliche Abschnitt der Materialbahn 28 von dem restlichen, noch über die Tragrollen 20 geführten Abschnitt der Materialbahn 28 getrennt.

Vorteilhaft wird im Rahmen eines Verfahrens zum Herstellen eines Filtermoduls unter Verwendung des Bautisches 10 im Falle eines ablaufenden Endes einer Materialbahn 28 das Ende mit dem Anfang einer neuen Materialbahn 28 verbunden. Dieses Verbinden erfolgt zum Beispiel im Bereich einer Zuführung - bevorzugt seitlich am Bautisch 10 - der Materialbahn 28. Das Verbinden kann durch Nähen, Tackern, Kleben oder dergleichen erfolgen. Durch ein solches, ggf. mehrfach wiederholtes Verbinden kann das Herstellen eines Filtermoduls mit gewissermaßen unendlich langen Materialbahnen 28 erfolgen, so dass sich ein noch weiter verkontinuierlichter Arbeitsprozess ergibt und Reste und Fehlablängungen vermieden werden.

### Bezugszeichenliste

- 10: Vorrichtung, Bautisch
- 12: Standkonstruktion, Unterkonstruktion
- 14: Arbeitsplatte
- 16: Ausschnitt (in der Arbeitsplatte)
- 18: Sockel
- 20: Tragrolle
- 22: Tragkonstruktion
- 24: letzte Tragrolle
- 26: weitere Tragrolle
- 28: Materialbahn
- 30: Haltekonstruktion
- 32: Haltefinger
- 34: Spitze (am freien Ende eines Haltefingers)
- 36: Teil (eines Haltefingers)
- 38: Teil (eines Haltefingers)
- 40: Karton
- 42: Lasche (Verschlusslasche; am Karton)

## Patentansprüche

1. Vorrichtung (10)
mit einer Arbeitsplatte (14) sowie einer Tragkonstruktion (22) oberhalb der Arbeitsplatte (14),
mit
einem Ausschnitt (16) in der Arbeitsplatte (14),
**gekennzeichnet durch**
an der Tragkonstruktion (22) angebrachte Tragrollen (20, 24),
wobei sich unter den Tragrollen (20) eine letzte Tragrolle (24) über dem Ausschnitt (16) befindet.

2. Vorrichtung (10) nach Anspruch 1,
mit einer Haltekonstruktion (30) und mit zumindest einem an der Haltekonstruktion (30) schwenkbeweglichen Haltefinger (32) .

3. Vorrichtung (10) nach Anspruch 2,
wobei der Haltefinger (32) oder zumindest ein Haltefinger (32) längenverstellbar ist.

4. Vorrichtung (10) nach einem der vorangehenden Ansprüche,
wobei der Ausschnitt (16) durch jeweils zwei einander gegenüberliegende Ränder begrenzt ist,
wobei mittels des Ausschnitts (16) ein Karton (40) mit umgeklappten Laschen (42) aufnehmbar ist und
wobei die Ränder des Ausschnitts (16) die Laschen (42) des Kartons (40) in einer Offenstellung halten.

5. Vorrichtung (10) nach einem der vorangehenden Ansprüche,
wobei über die Tragrollen (20) eine Materialbahn (28) führbar ist und von der letzten Tragrolle (24) in Richtung auf den Ausschnitt (16) unter der letzten Tragrolle (24) führbar ist.

6. Vorrichtung (10) nach einem der vorangehenden Ansprüche,
wobei die Vorrichtung (10) zur Herstellung eines zum Abscheiden von mit einem Rohgasstrom mitgeführten Partikeln bestimmten Filtermoduls bestimmt ist,
wobei das Filtermodul einen als äußerer Rahmen fungierenden Karton (40) umfasst,
wobei das Filtermodul in dem Karton (40) zumindest eine mehrfach umgelegte und als Filter- und/oder Abscheideelement wirksame Materialbahn (28) sowie Abstandshalter zwischen aufgrund des Umlegens einander zugewandten Abschnitten der Materialbahn (28) umfasst,
wobei die zumindest eine Materialbahn (28) beim Herstellen und zum Herstellen des Filtermoduls über die Tragrollen (20) der Vorrichtung (10) führbar ist und von der letzten Tragrolle (24) in Richtung auf den Ausschnitt (16) unter der letzten Tragrolle (24) und in den im Ausschnitt (16) platzierten Karton (40) führbar ist.

7. Vorrichtung (10) nach einem der vorangehenden Ansprüche,
wobei die Vorrichtung (10) zur Herstellung eines zum Abscheiden von mit einem Rohgasstrom mitgeführten Partikeln bestimmten Filtermoduls bestimmt ist,
wobei das Filtermodul einen als äußerer Rahmen fungierenden Karton (40) umfasst,
wobei das Filtermodul in dem Karton (40) zumindest eine mehrfach umgelegte und als Filter- und/oder Abscheideelement wirksame Materialbahn (28) sowie Abstandshalter zwischen aufgrund des Umlegens einander zugewandten Abschnitten der Materialbahn (28) umfasst,
wobei die zumindest eine Materialbahn (28) beim Herstellen und zum Herstellen des Filtermoduls über die Tragrollen (20) der Vorrichtung (10) führbar ist und
wobei die Haltevorrichtung (30) mit dem zumindest einen daran schwenkbeweglichen Haltefinger (32) zum Verhindern eines Zurückrutschens der über die Tragrollen (20) der Vorrichtung (10) geführten Materialbahn (28) bestimmt und eingerichtet ist.

8. Verfahren zum Herstellen eines Filtermoduls mittels einer Vorrichtung (10) nach einem der Ansprüche 1 bis 7,
wobei das Filtermodul einen als äußerer Rahmen fungierenden Karton (40) umfasst,
wobei das Filtermodul in dem Karton (40) als Ergebnis des Herstellungsverfahren zumindest eine mehrfach umgelegte und als Filter- und/oder Abscheideelement wirksame Materialbahn (28) sowie Abstandshalter zwischen aufgrund des Umlegens einander zugewandten Abschnitten der Materialbahn (28) umfasst,
wobei die zumindest eine Materialbahn (28) beim Herstellen und zum Herstellen des Filtermoduls über die Tragrollen (20) der Vorrichtung (10) geführt und von der letzten Tragrolle (24) in Richtung auf den Ausschnitt (16) unter der letzten Tragrolle (24) und in den im Ausschnitt (16) platzierten Karton (40) geführt wird.

9. Verfahren nach Anspruch 8,
wobei eine Länge eines längenverstellbaren, schwenkbeweglichen Haltefingers (32), nämlich eines an einer Haltekonstruktion (30) schwenkbeweglichen Haltefingers (32), zum Verhindern eines Zurückrutschens der über die Tragrollen (20) der Vorrichtung (10) geführten Materialbahn (28) eingestellt wird.

## Claims

1. A device (10) comprising a work surface (14) and a support structure (22) above the work surface (14),
comprising a cutout (16) in the work surface (14), **characterized by**
support rollers (20, 24) mounted on the support structure (22),
wherein under the support rollers (20), a final support roller (24) is located above the cutout (16).

2. The device (10) according to claim 1,
comprising a retaining structure (30) and at least one retaining finger (32) that is pivotable on the retaining structure (30).

3. The device (10) according to claim 2,
wherein the retaining finger (32) or at least one retaining finger (32) is adjustable in length.

4. The device (10) according to any of the preceding claims,
wherein the cutout (16) is delimited by two opposite edges in each case,
wherein a carton (40) having folded-down flaps (42) can be received by means of the cutout (16), and
wherein the edges of the cutout (16) retain the flaps (42) of the carton (40) in an open position.

5. The device (10) according to any of the preceding claims,
wherein a material web (28) can be guided over the support rollers (20), and can be guided from the final support roller (24) in the direction of the cutout (16), below the final support roller (24).

6. The device (10) according to any of the preceding claims,
wherein the device (10) is intended for producing a filter module that is intended for separating particles that are entrained by a raw gas stream,
wherein the filter module comprises a carton (40) that functions as an outer frame,
wherein the filter module in the carton (40) comprises at least one material web (28) that is folded over multiple times and acts as a filter element and/or separation element, and comprises spacers between sections of the material web (28) that face one another due to being folded over,
wherein, during production of and for producing the filter module, the at least one material web (28) can be guided over the support rollers (20) of the device (10), and can be guided from the final support roller (24) in the direction of the cutout (16), below the final support roller (24) and into the carton (40) that is placed in the cutout (16).

7. The device (10) according to any of the preceding claims,
wherein the device (10) is intended for producing a filter module that is intended for separating particles that are entrained by a raw gas stream,
wherein the filter module comprises a carton (40) that functions as an outer frame,
wherein the filter module in the carton (40) comprises at least one material web (28) that is folded over multiple times and acts as a filter element and/or separation element, and comprises spacers between sections of the material web (28) that face one another due to being folded over,
wherein, during production of and for producing the filter module, the at least one material web (28) can be guided over the support rollers (20) of the device (10), and
wherein the retaining device (30), by means of the at least one retaining finger (32) that is pivotable thereon, is intended and configured to prevent the material web (28) that is guided over the support rollers (20) of the device (10) from slipping back.

8. A method for producing a filter module by means of a device (10) according to any of claims 1 to 7,
wherein the filter module comprises a carton (40) that functions as an outer frame,
wherein the filter module in the carton (40) comprises, as a result of the production method, at least one material web (28) that is folded over multiple times and acts as a filter element and/or separation element, and comprises spacers between sections of the material web (28) that face one another due to being folded over,
wherein, during production of and for producing the filter module, the at least one material web (28) is guided over the support rollers (20) of the device (10), and is guided from the final support roller (24) in the direction of the cutout (16), below the final support roller (24) and into the carton (40) that is placed in the cutout (16).

9. The method according to claim 8,
wherein a length of a length-adjustable, pivotable retaining finger (32), namely a retaining finger (32) that is pivotable on a retaining structure (30), is adjusted to prevent the material web (28) that is guided over the support rollers (20) of the device (10) from slipping back.

## Revendications

1. Dispositif (10),
comprenant un plan de travail (14) ainsi qu'une structure porteuse (22) au-dessus du plan de travail (14),
comprenant une découpe (16) dans le plan de travail (14),
**caractérisé par** des rouleaux porteurs (20, 24) montés sur la structure porteuse (22),
dans lequel un dernier rouleau porteur (24) parmi les rouleaux porteurs (20) se trouve au-dessus de la découpe (16) .

2. Dispositif (10) selon la revendication 1,
comprenant une structure de retenue (30) et au moins un doigt de retenue (32) pivotant au niveau de la structure de retenue (30).

3. Dispositif (10) selon la revendication 2,
dans lequel le doigt de retenue (32) ou au moins un doigt de retenue (32) est réglable en longueur.

4. Dispositif (10) selon l'une quelconque des revendications précédentes,
dans lequel la découpe (16) est délimitée par respectivement deux bords mutuellement opposés,
dans lequel la découpe (16) permet de recevoir un carton (40) à rabats (42) rabattus, et
dans lequel les bords de la découpe (16) maintiennent les rabats (42) du carton (40) dans une position ouverte.

5. Dispositif (10) selon l'une quelconque des revendications précédentes, dans lequel une bande de matière (28) peut être guidée par les rouleaux porteurs (20), et peut être guidée par le dernier rouleau porteur (24) en direction de la découpe (16) sous le dernier rouleau porteur (24).

6. Dispositif (10) selon l'une quelconque des revendications précédentes,
dans lequel le dispositif (10) est destiné à fabriquer un module de filtre destiné à séparer des particules entraînées par un flux de gaz brut,
dans lequel le module de filtre comprend un carton (40) faisant office de cadre extérieur,
dans lequel le module de filtre dans le carton (40) comprend au moins une bande de matière (28), repliée plusieurs fois et servant d'élément de filtre et/ou de séparation, ainsi que des écarteurs entre des sections de la bande de matière (28) tournées les unes vers les autres en raison du pliage,
dans lequel, lors de la fabrication et pour la fabrication du module de filtre, ladite au moins une bande de matière (28) peut être guidée par les rouleaux porteurs (20) du dispositif (10), et peut être guidée par le dernier rouleau porteur (24) en direction de la découpe (16) sous le dernier rouleau porteur (24) et dans le carton (40) placé dans la découpe (16).

7. Dispositif (10) selon l'une quelconque des revendications précédentes,
dans lequel le dispositif (10) est destiné à fabriquer un module de filtre destiné à séparer des particules entraînées par un flux de gaz brut,
dans lequel le module de filtre comprend un carton (40) faisant office de cadre extérieur,
dans lequel le module de filtre dans le carton (40) comprend au moins une bande de matière (28), repliée plusieurs fois et servant d'élément de filtre et/ou de séparation, ainsi que des écarteurs entre des sections de la bande de matière (28) tournées les unes vers les autres en raison du pliage,
dans lequel lors de la fabrication et pour la fabrication du module de filtre, ladite au moins une bande de matière (28) peut être guidée par les rouleaux porteurs (20) du dispositif (10), et
dans lequel le dispositif de retenue (30) pourvu dudit au moins un doigt de retenue (32) pivotant au niveau de celui-ci est destiné à et aménagé pour empêcher un recul de la bande de matière (28) guidée par les rouleaux porteurs (20) du dispositif (10).

8. Procédé permettant de fabriquer un module de filtre au moyen d'un dispositif (10) selon l'une quelconque des revendications 1 à 7,
dans lequel le module de filtre comprend un carton (40) faisant office de cadre extérieur,
dans lequel le module de filtre dans le carton (40), suite au procédé de fabrication, comprend au moins une bande de matière (28), repliée plusieurs fois et servant d'élément de filtre et/ou de séparation, ainsi que des écarteurs entre des sections de la bande de matière (28) tournées les unes vers les autres en raison du pliage,
dans lequel, lors de la fabrication et pour la fabrication du module de filtre, ladite au moins une bande de matière (28) est guidée par les rouleaux porteurs (20) du dispositif (10) et est guidée par le dernier rouleau porteur (24) en direction de la découpe (16) sous le dernier rouleau porteur (24) et dans le carton (40) placé dans la découpe (16) .

9. Procédé selon la revendication 8,
dans lequel une longueur d'un doigt de retenue pivotant (32), réglable en longueur, notamment d'un doigt de retenue (32) pivotant au niveau d'une structure de retenue (30), est réglée pour empêcher un recul de la bande de matière (28) guidée sur les rouleaux porteurs (20) du dispositif (10).
